# EUROPÄISCHE PATENTSCHRIFT

(11) **EP 4 365 691 B1**
(45) Veröffentlichungstag und Bekanntmachung des Hinweises auf die Patenterteilung: **23.07.2025**
(21) Anmeldenummer: 22205933.9
(22) Anmeldetag: 07.11.2022
(51) Int. Cl.: G05B 19/418, G06Q 10/0639

(54) **VERFAHREN FÜR EINE COMPUTER-GESTÜTZTE ERMITTLUNG DER EFFIZIENZ BEI DER INSTALLATION VON RÄUMLICH DEZENTRAL ANGEORDNETEN, ELEKTRISCHEN KOMPONENTEN EINER MASCHINE**
METHOD FOR A COMPUTER-ASSISTED DETERMINATION OF EFFICIENCY DURING THE INSTALLATION OF ELECTRICAL COMPONENTS OF A MACHINE ARRANGED IN A SPATIALLY DECENTRALISED MANNER
PROCÉDÉ DE DÉTERMINATION ASSISTÉE PAR ORDINATEUR DE L'EFFICACITÉ DE L'INSTALLATION DE COMPOSANTS ÉLECTRIQUES D'UNE MACHINE AGENCÉS DE MANIÈRE DÉCENTRALISÉE DANS L'ESPACE

(43) Veröffentlichungstag der Anmeldung: 08.05.2024
(73) Patentinhaber: Murrelektronik GmbH, 71570 Oppenweiler (DE)
(72) Erfinder: Pfestorf, Sebastian, 71522 Backnang (DE); Zeller, Paul, 74223 Flein (DE)
(74) Vertreter: Bösherz Goebel Patentanwälte

(56) Entgegenhaltungen:
- CN-A- 108 574 203
- US-A1- 2012 136 692
- US-A1- 2020 193 354
- KAI GUTENSCHWAGER ET AL: "The shortest path", 20121209; 1077952576 - 1077952576, 9 December 2012 (2012-12-09), pages 1 - 12, XP058029198

## Beschreibung

### Technisches Gebiet

Die vorliegende Erfindung betrifft allgemein das Gebiet der Planung, Installation und Einrichtung von elektrischen Maschinen wie elektrischen Anlagen in der Automatisierungstechnik und insbesondere ein Verfahren für eine computer-gestützte Ermittlung der Effizienz und/oder von Ineffizienzen bei der Installation von räumlich dezentral angeordneten, elektrischen Komponenten einer Maschine.

### Hintergrund

Das Planen, Installieren und Einrichten von elektrischer Automatisierungstechnik ist eine komplexe Aufgabe. Dies gilt für zentralisierte Schaltschrankkonzepte ebenso, wie für dezentralisierte Konzepte, in denen Steuerungsmodule direkt an den Anlagen angebracht werden. Im Serienmaschinen- und -anlagenbau werden Maschinen und Anlagen oft in einer hohen Stückzahl wiederkehrend installiert. Gerade dezentral automatisierte Maschinen und Anlagen benötigen zuweilen komplexe Laufwege bei der Installation und erfordern nichttriviale Verlegewege. Die Installation solch komplexer Anlagen wird typischerweise von mehreren Personen mit unterschiedlichen Aufgaben und Fähigkeitsprofilen, wie Anlagen-Planern, Elektro-Planern, Installateuren, Anlagenprogrammierern, usw. durchgeführt. Aufgrund von individuellen Präferenzen sowie suboptimalen räumlichen Gegebenheiten entstehen oft Ineffizienzen im Installationsprozess. Es ist daher eine Aufgabe, die der Erfindung zugrunde liegt, ein computer-gestütztes Verfahren und ein System bereitzustellen, um eine einfachere, schnellere, sichere und fehlerfreie Installation von elektrischen Komponenten zu ermöglichen und dabei die oben genannten Nachteile des Standes der Technik zumindest teilweise zu überwinden. CN 108 574 203 A offenbart als Stand der Technik einen Schaltschrank und befasst sich insbesondere mit der Aufgabe, die Installationsgeschwindigkeit von Elementen des Schaltschranks sowie die Anforderungen an die Installateure zu verringern.

### Beschreibung der Erfindung

Die voranstehende Aufgabe wird gelöst durch ein Verfahren, System, Computerprogramm sowie eine Vorrichtung zur Datenverarbeitung gemäß den unabhängigen Patentansprüchen.

Weitere Merkmale und Details der Erfindung ergeben sich aus den jeweiligen Unteransprüchen, der Beschreibung und den Zeichnungen.

Gegenstand der Erfindung ist insbesondere ein Verfahren für eine computer-gestützte Ermittlung der Effizienz und/oder von Ineffizienzen bei der Installation von räumlich dezentral angeordneten, elektrischen Komponenten einer Maschine, insbesondere einer Anlage.

Die Maschine kann als wenigstens eine der nachfolgend genannten Maschinen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Maschine dabei als eine Maschine mit modularem Charakter oder auch als mobile oder bewegliche Maschine ausgebildet sein, bei welcher einzelne Teile der Maschine modular gemäß einer Installationsvorgabe installiert werden. Diese Installation erfolgt zumindest teilweise manuell durch einen Benutzer wie einen Werker.

Die elektrischen Komponenten können Verbindungsmodule sein, welche eine dezentrale und modulare Verbindung von Installationselementen ermöglichen. Dezentral kann sich dabei darauf beziehen, dass die Verbindungsmodule zumindest teilweise einen zentralen Schaltschrank ersetzen, indem die Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden. In diesem Fall kann von einer Modul-Switch-Modul-Hub-Punkt-Verbindung gesprochen werden. Grundsätzlich können bei einer Maschine bspw. die folgenden Komponenten vorgesehen sein: Geräte wie Aktoren und/oder Sensoren, die Verbindungsmodule, Installationselemente, bspw. zur Verkabelung.

Das Verfahren kann dabei die nachfolgenden Schritte umfassen, welche vorzugsweise nacheinander oder in beliebiger Reihenfolge ausgeführt werden, wobei die Schritte auch wiederholt ausgeführt werden können:
- Erfassen eines Startzeitpunktes eines Arbeitsschrittes bei der Installation eines Installationselements, vorzugsweise eines Kabels oder eines Bauteils, der Maschine;
- Erfassen zumindest eines Bewegungsprofils eines Benutzers während der Ausführung des Arbeitsschrittes;
- Erfassen eines Endzeitpunktes des Arbeitsschrittes;
- Ermitteln zumindest einer Installationseffizienz bei der Ausführung des Arbeitsschrittes zumindest zum Teil basierend auf einer dem Start- und Endzeitpunkt entsprechenden für den Arbeitsschritt benötigten Zeit und/oder dem erfassten zumindest einen Bewegungsprofil; und
- automatisches Dokumentieren der zumindest einen ermittelten Installationseffizienz.

Auf diese Weise kann auch ein Unterstützungssystem zur elektrischen Installation, insbesondere Verkabelung von Maschinen, insbesondere Anlagen, mit modularem Charakter bereitgestellt werden. Die Erfindung ermöglicht insbesondere eine einfachere, schnellere und fehlerfreiere Verkabelung. Diese Optimierung wird durch die Bereitstellung eines Systems herbeigeführt, welches die Installationsdokumentation bzw. den Installationsvorgang auf Ineffizienzen analysiert, um Optimierungsoptionen zu identifizieren und auszugeben.

Vorzugsweise kann das Installationselement ein Kabel und/oder ein Bauteil umfassen, wobei das Kabel mindestens oder genau einen Steckverbinder aufweisen kann, und bevorzugt einseitig konfektioniert sein kann, d.h. einseitig einen weiblichen oder männlichen Stecker und an der anderen Seite ein offenes Ende aufweist. Alternativ kann das Kabel auch zweiseitig konfektioniert sein, d.h. an jeder Seite weist das Kabel einen weiblichen oder männlichen Stecker auf.

Ein Benutzer kann bspw. ein Installateur und/oder Anlagenmechaniker und/oder Elektriker und/oder Werker und/oder Planer und/oder mechanischer Konstrukteur oder Entwickler und/oder elektrischer Konstrukteur oder Entwickler und/oder SPS-Programmierer und/oder Inbetriebnehmer und/oder Instandhalter und/oder Maschinenführer sein. Es ist möglich, dass der Benutzer das erfindungsgemäße Verfahren dadurch verwendet, dass das Verfahren über einen Computer für den Benutzer bereitgestellt wird. Hierzu kann ein Computerprogramm zumindest teilweise durch den Computer und/oder einen weiteren Computer ausgeführt werden, um die erfindungsgemäßen Verfahrensschritte durchzuführen. Eine ermittelte Installationseffizienz kann ein Wert sein, der ein Maß für die Effizienz bei der Installation der Maschine angibt. Gemäß dem obigen Aspekt kann zumindest eine Installationseffizienz ermittelt werden, d.h. es können gegebenenfalls mehrere "Kennzahlen" für die Effizienz erhoben werden. Das Erfassen einer solchen Effizienz-Kennzahl (oder von mehreren) bei der Durchführung der Arbeitsschritte kann vorteilhafterweise eine höhere Transparenz über die voraussichtlich benötigte Zeit zur Installation einer Maschine oder Anlage schaffen, insbesondere für Benutzer mit unterschiedlichen Qualifikationen und/oder Fähigkeiten. Dadurch kann nicht nur die Abschätzung der voraussichtlich benötigten Arbeitszeit für die Benutzer leichter fallen, sondern auch für die Ressourcen- und/oder Kapazitätsplanung im gesamten Betrieb.

In einem Aspekt der Erfindung kann der Startzeitpunkt durch ein Empfangen eines Identifikators des Installationselements erfasst werden. Der Identifikator kann von einer Lesevorrichtung erfasst werden. Die Lesevorrichtung kann direkt oder indirekt dem Benutzer zugeordnet sein. Das Erfassen des zumindest einen Bewegungsprofils des Benutzers kann durch ein Orten der dem Benutzer zugeordneten Lesevorrichtung erfolgen. Der Endzeitpunkt kann durch ein Empfangen einer Bestätigung einer korrekten Montage des Installationselements erfasst werden, beispielsweise einer manuellen Bestätigung durch den Benutzer.

Für die Installation der Maschine können mehrere Installationselemente vorgesehen sein. Diesen Installationselementen kann jeweils ein Identifikator zugeordnet sein, durch welchen die Installationselemente eindeutig identifiziert werden können. Der Identifikator kann entsprechend eine Information sein, welche bspw. digital verarbeitet werden kann. Das jeweilige Installationselement kann den Identifikator dadurch aufweisen, dass ein physisches Identifikationsmittel am Installationselement vorgesehen und/oder angebracht ist. Die Installationselemente können bspw. Kabel oder Bauteile sein, welche ein funktionaler Teil der Maschine sind. Insbesondere werden über die Installationselemente Geräte der Maschine wie Aktoren und/oder Sensoren betrieben, also vorzugsweise angesteuert und/oder ausgelesen. Für den Betrieb der Geräte kann eine Steuerungsvorrichtung wie eine SPS (Speicherprogrammierbare Steuerung) vorgesehen sein, welche über die Installationselemente und Komponenten den elektrischen Betrieb der Geräte durchführen kann. Hierzu kann die Steuerungsvorrichtung mit den Komponenten in elektrischer Verbindung stehen.

Wenn, wie in dem obigen Aspekt beschrieben, der Startzeitpunkt des jeweiligen Arbeitsschrittes und/oder das Bewegungsprofil des Benutzers bei der Ausführung des Arbeitsschrittes mittels der benutzerzugeordneten Lesevorrichtung erfasst wird, ergibt sich ein besonders nahtloser und sicherer Ende-zu-Ende-Prozess. Denn der Benutzer muss keine zusätzlichen Eingaben tätigen, um die Startzeit und/oder das Bewegungsprofil zu dokumentieren. Vielmehr erfolgt dies zumindest teilweise automatisiert während der üblichen Tätigkeit des Benutzers bei der Installation der Maschine. Somit wird nicht nur die Benutzerfreundlichkeit erhöht, sondern Fehleingaben oder gänzlich vergessene Eingaben werden zuverlässig vermieden.

In einem weiteren Aspekt der Erfindung kann das Ermitteln der zumindest einen Installationseffizienz ein Vergleichen der ermittelten für den Arbeitsschritt benötigten Zeit mit einer Soll-Zeit für diesen Arbeitsschritt umfassen. Die Soll-Zeit kann in einer (historischen) Datenbasis oder einem anders ausgestalteten digitalen Datenspeicher gespeichert sein. Die Soll-Zeit kann einer mittleren benötigten Zeit für diesen Arbeitsschritt entsprechen. Alternativ oder zusätzlich kann die Soll-Zeit eine manuell vordefinierte Ziel-Zeit sein oder auf einer solchen basieren. Beispielsweise kann initial, d.h. bevor historische Daten zur Verfügung stehen, ein manueller Zielwert für die für den Arbeitsschritt zu benötigende Zeit vorgegeben werden. Ein üblicher Zielwert bzw. Eine sich typischerweise ergebende mittlere benötigte Zeit bei einer komplexen dezentralen Anlage ist z.B. ungefähr vier bis fünf Minuten bei der Verarbeitung eines vorkonfektionierten Installationselements. Das Konfektionieren im Feld kann beispielsweise ungefähr weitere fünf bis sieben Minuten benötigen. Soll-Zeiten können mittels fachüblicher Verfahren zur Vorgabezeitenermittlung (z.B. nach REFA oder MTM) ermittelt und im Arbeitsplan hinterlegt werden.

Durch die Erfassung der Zeit, die die unterschiedlichen Benutzer für die Durchführung einzelner Installationsschritte benötigen, lassen sich somit Standardbereiche ermitteln. Diese Standardbereiche geben Auskunft über die Zeit, die Benutzer mit unterschiedlichen Fähigkeiten und Qualifikationen im Normalfall für die Durchführung eines Arbeitsschritts benötigen. Vorzugsweise wird eine mittlere benötigte Zeit für jede einer Mehrzahl von Benutzergruppen gebildet. Welcher Benutzergruppe der aktuelle Benutzer angehört kann beispielsweise anhand eines Anmeldevorgangs vor Beginn der Installation bzw. Des Arbeitsschrittes abgeleitet werden.

Durch das Festlegen von zulässigen Standardabweichungen können ungewöhnlich starke Abweichungen identifiziert und interpretiert werden. Falls die benötigte Zeit außerhalb eines vorgegebenen Akzeptanzbereichs bezüglich der Soll-Zeit liegt, kann ein (automatisches) Dokumentieren der Ausführung des Arbeitsschrittes als auffällige Ausführung erfolgen. Der vorgegebene Akzeptanzbereich kann beispielsweise ± 30 % oder ± 50 % sein. Bei einer solchen Abweichung außerhalb eines Soll-Bereichs entspricht die ermittelte Installationseffizienz somit faktisch einer Installationsineffizienz. Nachfolgend werden die Begriffe "Installationseffizienz" und "Installationsineffizienz" der Einfachheit halber synonym verwendet und seien je nachdem, ob damit ein ermittelter Wert an sich oder ein interpretierter Wert gemeint ist, verstanden.

In einem weiteren Aspekt der Erfindung kann das Ermitteln der zumindest einen Installationseffizienz ein Vergleichen des erfassten zumindest einen Bewegungsprofils des Benutzers mit zumindest einem Soll-Bewegungsprofil für diesen Arbeitsschritt umfassen. Das Soll-Bewegungsprofil kann in einer (historischen) Datenbasis, insbesondere in der bereits weiter oben erwähnten (historischen) Datenbasis, gespeichert sein. Auch hier kann zusätzlich oder alternativ ein ideales Bewegungsprofil manuell vorgegeben werden. Das Bewegungsprofil kann beispielsweise mittels Technologien für standortbezogene Dienste (engl. "location-based services"; LBS) wie GPS, WiFi 6 und/oder 5G-Campusnetz erfasst werden.

Damit können, zusätzlich oder alternativ zu der benötigten Zeit für einzelne Arbeitsschritte, die Bewegungsdaten der einzelnen Nutzer während der Installation erfasst und auf Ineffizienzen hin untersucht werden. So können etwaige Ineffizienzen hinsichtlich der Lagerung und/oder Platzierung der zu installierenden Komponenten oder der Reihenfolge der Installation einzelner Komponenten ermittelt werden (z.B. falls sich Komponenten nur in einer bestimmten Abfolge logisch und gut zugänglich installieren bzw. montieren lassen).

Besonders vorteilhaft ist es, wenn das Vergleichen des Bewegungsprofils des Benutzers mit dem Soll-Bewegungsprofil oder sogar das Erfassen des Bewegungsprofils des Benutzers während der Ausführung des Arbeitsschrittes nur dann erfolgt, wenn eine auffällige Ausführung identifiziert worden ist, d.h. falls die benötigte Zeit außerhalb des vorgegebenen Akzeptanzbereichs bezüglich der Soll-Zeit lag. Ein solches zweistufiges Vorgehen kann besonders ressourcenschonend sein, da die vergleichsweise aufwändige Bewegungsprofilanalyse nur dann durchgeführt werden muss, wenn bereits sicher ist, dass eine Auffälligkeit eingetreten ist. Das Eintreten der Auffälligkeit selbst konnte bereits anhand der vergleichsweise effizient implementierbaren Zeitanalyse erfolgen.

Mittels der obigen Aspekte der Erfindung bzw. Kombinationen derselben ist eine feingranulare Interpretation von erkannten Ineffizienzen möglich:
- Falls das ermittelte zumindest eine Bewegungsprofil innerhalb eines vorgegebenen Akzeptanzbereichs bezüglich des Soll-Bewegungsprofils liegt, kann die Ausführung des Arbeitsschrittes als (nur) hinsichtlich der Ausführungszeit auffällig dokumentiert werden.
- Falls das ermittelte zumindest eine Bewegungsprofil außerhalb eines vorgegebenen Akzeptanzbereichs bezüglich des Soll-Bewegungsprofils liegt, kann die Ausführung des Arbeitsschrittes als hinsichtlich der Ausführungszeit und des Bewegungsprofils auffällig dokumentiert werden.
- Falls die auffällige Ausführung (hinsichtlich Zeit oder hinsichtlich Zeit und Weg) außerhalb eines vorgegebenen Akzeptanzbereichs bezüglich der Ausführungshäufigkeit für den Benutzer liegt, kann eine personenspezifische Installationsineffizienz dokumentiert werden.
- Falls die auffällige Ausführung (hinsichtlich Zeit oder hinsichtlich Zeit und Weg) außerhalb eines vorgegebenen Akzeptanzbereichs bezüglich der Ausführungshäufigkeit für mehrere Benutzer liegt, kann eine arbeitsschrittspezifische Installationsineffizienz dokumentiert werden.

Ein typischer Beispielwert für den vorgegebenen Akzeptanzbereich bezüglich des Soll-Bewegungsprofils ist ± 30 % oder ± 50 %. Ein typischer Beispielwert für den vorgegebenen Akzeptanzbereich bezüglich der Ausführungshäufigkeit für den Benutzer bzw. für mehrere Benutzer ist ± 30 % oder ± 50 %.

Werte für die genannten Akzeptanzbereiche können beispielsweise in IT-Systemen zur Produktionsplanung, zum Controlling und/oder zur Rechnungsstellung definiert sein und über zugehörige Schnittstellen abgerufen werden. Auch in der Gegenrichtung können die Daten wieder genutzt werden, beispielsweise um in den IT-System wiederum automatisiert die Margen usw. zu berechnen. Somit ist in dieser Variante eine bidirektionale Kommunikation bzw. Anreicherung der Daten möglich.

Das Dokumentieren erfolgt jeweils vorzugsweise automatisiert, d.h. ohne oder mit minimaler Interaktion mit dem Benutzer. Somit werden Fehleingaben oder vergessene Eingaben vermieden und eine lückenlose und zutreffende Dokumentation sichergestellt.

In einem weiteren Aspekt der Erfindung kann ein Ermitteln einer räumlichen Distanz eines Lagerortes des Installationselements zu einem Installationsort der Maschine vorgesehen sein. Falls die räumliche Distanz außerhalb eines vorgegebenen Akzeptanzbereichs liegt, kann zumindest eine Ausführung des Arbeitsschrittes mit einem alternativen Lagerort des Installationselements und/oder mit einer alternativen Transportroute simuliert werden. Falls die zumindest eine simulierte Ausführung des Arbeitsschrittes ein vorgegebenes Optimierungsziel erfüllt, kann die zumindest eine simulierte Ausführung des Arbeitsschrittes (vorzugsweise wiederum automatisiert) dokumentiert werden.

Durch die obigen Erfindungsaspekte bzw. verschiedene denkbare Kombinationen davon wird eine automatische Erfassung und Interpretation von Montagezeiten und/oder -abläufen mit dem Ziel der Optimierung der elektrischen Installation von dezentralen Maschinen, insbesondere Anlagen, und/oder die Optimierung weiterer Prozesse und/oder Abläufe, insbesondere bezüglich der Lager- und Logistikabläufe, ermöglicht. Die Optimierung der Lagerorte und/oder Transportwege für Produktionsmaterial und/oder der Abläufe der einzelnen Installationsschritte kann die Effizienz des Installationsvorgangs sowie der betriebsinternen Abläufe signifikant erhöhen. Zudem kann eine verbesserte Standardisierung der Produktion zu zeitlichen Einsparungen und/oder exakteren Auskünften zu Lieferzeitpunkten führen. Es sei betont, dass diese technischen Vorteile kausal bedingt durch den Informationsgewinn sind, den die hier beschriebenen Erfindungsaspekte ermöglichen. Bei der gewonnenen Information handelt es sich um technische Information über den (internen) Zustand der zu installierenden Maschine bzw. Anlage.

In einem weiteren Aspekt der Erfindung kann zumindest eine Optimierungsinformation ausgegeben werden. Die Optimierungsinformation kann zumindest zum Teil auf der zumindest einen ermittelten Installations(in)effizienz und/oder auf der zumindest einen simulierten Ausführung des Arbeitsschrittes basieren. Die Ausgabe kann während der Installation der Maschine oder danach erfolgen.

Durch eine Ausgabe der Optimierungsinformation bereits während der Installation der Maschine, beispielsweise unmittelbar nach Auswertung des aktuellen Arbeitsschrittes und idealerweise vor Beginn des nachfolgenden Arbeitsschrittes kann der Installationsprozess dynamisch an die Auswertungsergebnisse angepasst werden. Beispielsweise kann eine Installationsanleitung für den Benutzer hinsichtlich des nächsten Arbeitsschrittes angepasst werden. Auch ist es denkbar, dass die Maschine automatisch gesperrt wird, um eine weitere Installation zu unterbrechen.

Die Ausgabe der zumindest einen Optimierungsinformation kann (auch) maschinenlesbar sein oder zumindest einen maschinenlesbaren Teil umfassen. Die maschinenlesbare Ausgabe bzw. der maschinenlesbare Teil kann zumindest eine Steueranweisung und/oder ein Steuersignal umfassen. Die maschinenlesbare Ausgabe bzw. der maschinenlesbare Teil kann zum zumindest teilweisen Steuern eines technischen Systems und/oder zum zumindest teilweisen Steuern eines technischen Prozesses konfiguriert sein. Bei dem technischen System kann es sich beispielsweise um eine (teil-)autonome Installationsvorrichtung z.B. in Form eines Werkstattwagens und/ oder eines Cobots zum Anreichen von Bauteilen und/oder eines Industrieroboters handeln. Für eine solche Vorrichtung lassen sich Koordinaten und/oder Bewegungsprofile automatisch ermitteln und auf die Vorrichtung übertragen.

Ferner kann auch eine Anpassung der Installationsanleitung, eine Veränderung in der Logistik, beispielsweise von Lagerorten zumindest teilweise automatisiert angestoßen werden. Weitere technische Prozesse, welche zumindest teilweise automatisiert angestoßen werden können, sind:
- Automatische Lagerhaltung bzw. Nachhalten tatsächlich verbauter Komponenten und/oder Module. Somit kann eine automatische Nachbestellung und/oder Voraussplanung sowie Bestellung nach Aufträgen erfolgen.
- Automatische Optimierung nach Verfügbarkeit von Bauteilen zur schnellstmöglichen Fertigstellung.
- Automatische Optimierung nach günstigsten Bauteilen.
- Automatische Anbindung an ein Enterprise-Resource-Planning (ERP) System, z.B. SAP, zur Erfassung der tatsächlichen Arbeitszeit für eine spätere automatisierte G&V und/oder für eine verbesserte und genauere zukünftige Angebotserstellung.
- Anpassungen des Workshop-Layouts der Fertigung und/oder von Hilfsmitteln (z.B. Drucker, Ablänganlage, etc.).
- Simulation von Alternativbauteilen durch Anbindung an ein Lagersystem für Teileverfügbarkeit
- Ermitteln von bauteilspezifischen Zeiten: Hier kann beispielsweise herausgefunden werden, dass ein Bauteil eines bestimmten Herstellers einfacher einbaubar ist als das eines anderen Herstellers, obwohl beide Bauteile formal eine ähnliche Spezifikation haben.
- On-the-fly Zuteilen von Qualifikationsniveaus bzw. Skill-Level zu den jeweiligen Benutzern.
- Automatisierte Erstellung einer Arbeitsplanung bzw. Auslastungsplanung anhand des verfügbaren Personals. Beispielsweise ist es denkbar, die Arbeit so zu planen, dass in Urlaubszeiten von erfahrenen Benutzern nur diejenigen Tätigkeiten eingeplant werden, für welche entsprechende Benutzer mit ausreichender Erfahrung vorhanden sind.
- Automatisches Erstellen und/oder Vorschlagen eines Ablaufplans in Abhängigkeit verfügbarer Benutzer mit Skill-Level.
- Automatisches Einplanen, ob Benutzer mit Spezialwerkzeugen und/oder Qualifikationen notwendig sind (Schweißerschein, Staplerschein, Programmierkenntnisse, Elektromeister, usw.). Hier kann auch eine entsprechende Werkzeugplanbelegung erfolgen.

Automatische Berechnungen von erforderlichen Maschinenmontagezeiten/ Anlagenmontagezeiten/ Produktmontagezeiten in Abhängigkeit der Qualifikationen des zu dem Zeitpunkt zur Verfügung stehenden Personals und damit einhergehende automatische Anpassung im ERP und Neuberechnung der Wirtschaftlichkeit des AuftragsUnabhängig von einer solchen unmittelbaren Ansteuerung von Installationsvorrichtungen und/oder anderer technischer Systeme kann zumindest eine Optimierungsinformation an den Benutzer und/oder einen Administrator ausgegeben werden. Die Optimierungsinformation kann auch hier zumindest zum Teil auf der zumindest einen ermittelten Installations(in)effizienz und/oder auf der zumindest einen simulierten Ausführung des Arbeitsschrittes basieren. Die Ausgabe kann während der Installation der Maschine oder danach erfolgen.

Die Optimierungsinformation nimmt dabei unmittelbar Bezug auf die tatsächlichen technischen Gegebenheiten in der gerade in der Installation befindlichen Maschine bzw. Anlage und ist deshalb technische Information. Da der Benutzer, beispielsweise der Installateur, idealerweise durch ein computer-gestütztes System bei der Installation geleitet wird, ist davon auszugehen, dass der Benutzer die Optimierungsinformation auch sinnvoll umsetzen bzw. befolgen wird, wodurch eine geschlossene technische Steuerung und/oder Regelung des Installationsprozesses entsteht, bei dem der Benutzer gewissermaßen ein technisches Ausführungsglied in der Kette ist.

In einem weiteren Aspekt der Erfindung kann ein Ermitteln einer für die Installation der Maschine benötigten Gesamtzeit, vorzugsweise aller Benutzer und ein automatisches Dokumentieren des ermittelten benötigten Gesamtzeit erfolgen. Hierdurch steht eine geschätzte Installationsdauer für zukünftige Installationsprojekte des gleichen oder eines ähnlichen Maschinentyps zur Verfügung, was die Planungssicherheit erhöhen kann und/oder unmittelbare Auswirkungen auf automatisiert ausgelöste Bestellvorgänge haben kann.

Ebenfalls Gegenstand der Erfindung ist ein System für eine computer-gestützte Ermittlung der Effizienz bzw. von Ineffizienzen bei der Installation von räumlich dezentral angeordneten, elektrischen Komponenten einer Maschine, insbesondere einer Anlage. Das System kann eine (vorzugsweise erfindungsgemäße) Vorrichtung zur Datenverarbeitung umfassen. Die Vorrichtung zur Datenverarbeitung kann Mittel zur Ausführung der Schritte der hier beschriebenen erfindungsgemäßen Verfahren umfassen. Damit bringt das erfindungsgemäße System die gleichen Vorteile mit sich, wie sie ausführlich mit Bezug auf ein erfindungsgemäßes Verfahren beschrieben worden sind.

Ebenfalls Gegenstand der Erfindung kann eine Vorrichtung zur Datenverarbeitung sein, umfassend Mittel zur Ausführung der Schritte des erfindungsgemäßen Verfahrens.

Ebenfalls Gegenstand der Erfindung ist ein Computerprogramm, umfassend Befehle, die bei der Ausführung des Programms durch einen Computer, wie die erfindungsgemäße Vorrichtung zur Datenverarbeitung, diesen veranlassen, die Schritte eines erfindungsgemäßen Verfahrens auszuführen. Damit bringt das erfindungsgemäße Computerprogramm die gleichen Vorteile mit sich, wie sie ausführlich mit Bezug auf ein erfindungsgemäßes Verfahren beschrieben worden sind.

### Kurzbeschreibung der Zeichnungen

Zum besseren Verständnis der Offenbarung wird auf die folgenden Zeichnungen verwiesen:
- Fig. 1:: Eine zentrale Verschaltung bei einer Maschine mittels eines Schaltschranks.
- Fig. 2:: Eine dezentrale Verschaltung gemäß Ausführungsbeispielen der Erfindung.
- Fig. 3: Eine schematische Darstellung von Teilen eines Systems gemäß Ausführungsbeispielen der Erfindung.
- Fig. 4: Eine schematische Darstellung von Einzelheiten eines Verfahrens gemäß Ausführungsbeispielen der Erfindung.
- Fig. 5: Eine schematische Darstellung von Schritten eines Verfahrens gemäß Ausführungsbeispielen der Erfindung.

### Beschreibung der Ausführungsbeispiele

Das Planen, Installieren und Einrichten von Maschinen sowie elektronischer Automatisierungstechnik ist eine komplexe Aufgabe. Dies gilt für zentralisierte Schaltschrank-Systeme ebenso wie für dezentralisierte Systeme, in denen Steuerungsmodule direkt an den Anlagen angebracht werden. Eine Besonderheit bei dezentralen Systemen ist die Verteilung der Module an verschiedenen Stellen einer Maschine im Vergleich zu den zentralisierten Schaltschrank-Systemen.

Die entsprechenden Prozesse werden von unterschiedlichen Personen, wie Anlagen-Planer, Elektro-Planer, Installateur, Anlagenprogrammierer etc. durchgeführt.

Mit den nachfolgend beschriebenen Ausführungsformen der Erfindung kann die Effizienz in einem Installationsprozess ermittelt und/oder können Ineffizienzen in einem Installationsprozess zuverlässig identifiziert und entsprechende Optimierungsmaßnahmen abgeleitet werden.

In einigen Ausführungsformen werden aus historischen Installationsdaten Standardwerte für die Dauer einzelner Arbeitsschritte im Installationsprozess generiert. Mithilfe der Standardabweichung werden Ausreißer bestimmt. Diese ermöglichen eine Unterscheidung zwischen unauffälligen und auffälligen zeitlichen Abweichungen. Sollte die benötigte Zeit innerhalb dieser Standardbereiche liegen, so sollte sie als unauffällig interpretiert werden.

Kommt es zur Überschreitung der Standardbereiche, so sollte dies als auffällig interpretiert werden. Ausreißende Montagezeiten können ein Indiz für Ineffizienzen in der Installation sein. Die Ursache ausreißender Montagezeiten können beispielsweise ineffiziente Laufwege bzw. Bewegungsprofile, schlecht geplante Lagerorte, Schulungsbedarfe für die Mitarbeiter und/oder Verbesserungspotentiale in den Installationsanweisungen und/oder Konstruktion sein.

Zudem können auch die erfassten Daten zu den Bewegungsprofilen der Benutzer analysiert werden. In einer Ausführungsform werden die Bewegungsdaten der von den Benutzern verwendeten Scanner erfasst und mit den Maschinendaten des MCAD abgeglichen. Anhand dieser Daten berechnet ein Algorithmus unter Einbezug eines Regelwerks möglichst kurze Wege und die voraussichtlich dafür benötigte Zeit. Sollten die so erstellten Wege wiederkehrend und signifikant von den tatsächlichen Bewegungsdaten abweichen, so folgert das System Ineffizienzen in den Bewegungsprofilen. Dies identifiziert beispielsweise auch Ineffizienzen in der Lagerhaltung. Sollten wiederkehrend lange Distanzen zwischen einzelnen Prozessschritten liegen, die nicht räumlich logisch miteinander verbunden sind, so erkennt das System diese.

Durch die Analyse der Bewegungsdaten können Bewegungsprofile in Verbindung mit den dafür benötigten Zeiten rekonstruiert werden. Diese können vom System zur Simulierung alternativer Bewegungsprofile mit Prognosewerten zur benötigten Zeit genutzt werden. Eine kürzere Zeit wird dabei als Optimierungsziel angesehen. Die jeweiligen generierten Alternativen werden somit im Hinblick auf die Erfüllung des Optimierungsziels verglichen. In einigen Ausführungsformen kann diejenige Alternative, welche das Optimierungsziel am besten erreicht, als präferierte Optimierungsmaßnahme an den Benutzer ausgegeben werden.

Sollten Bauteile wiederkehrend in einer großen räumlichen Entfernung zu ihrem planmäßigen Montageort durch eine Lesevorrichtung identifiziert werden, so kann das System anhand einer Simulation ermitteln, ob eine Veränderung des Lagerortes und/oder Transportwege der Bauteile die Bewegungsprofile optimieren und so die benötigte Zeit verkürzen könnte. Bei einem positiven Ergebnis wird die Veränderung des Lagerortes und/oder Transportwegs als Optimierungsmaßnahme identifiziert und an den Benutzer ausgegeben.

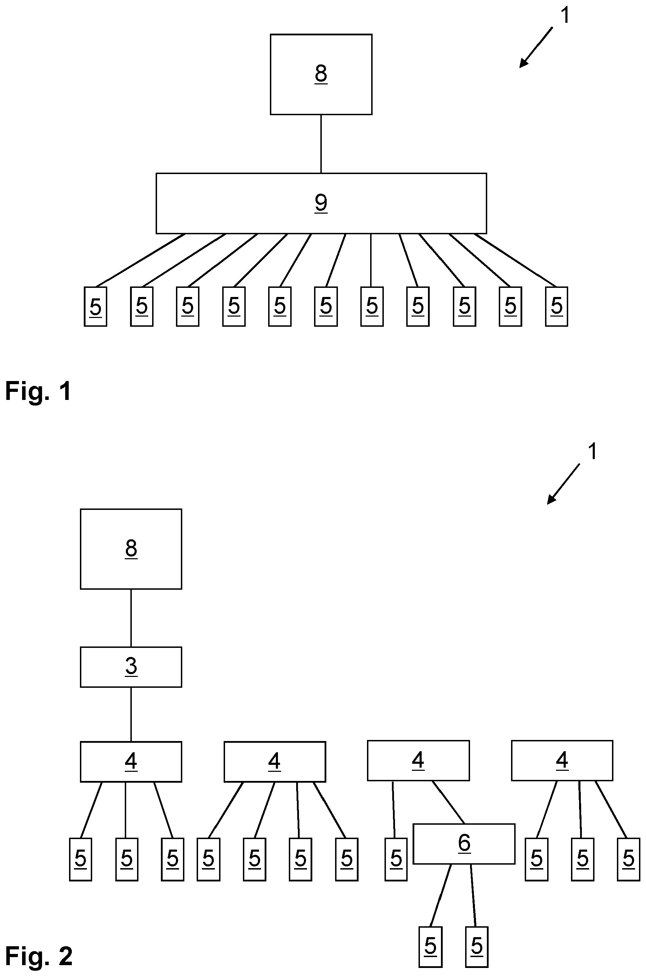

In Fig. 1 ist schematisch eine zentrale Verschaltung mittels eines Schaltschranks 9 dargestellt, um diese einer dezentralen Verschaltung mittels räumlich dezentral angeordneten, elektrischen Komponenten 4 einer Maschine 1 in Fig. 2 gegenüberzustellen. Anstelle einer Verbindung sämtlicher Geräte 5 wie Sensoren und Aktoren unmittelbar mit dem Schaltschrank 9 wie in Fig. 1 dargestellt, können bei der dezentralen Verschaltung in Fig. 2 mehrere Komponenten 4, also insbesondere Verbindungsmodule, eingesetzt werden. Diese ermöglichen, wie der Schaltschrank 9, eine Kopplung der Geräte 5 mit einer Steuerungsvorrichtung 8 wie einer SPS. Allerdings können die Verbindungsmodule 4 dezentral und verteilt in der Nähe zu den Geräte 5 vorgesehen sein. Die Verbindungsmodule 4 verschalten somit jeweils die Geräte 5 nur teilweise, wobei die Verbindungsmodule 4 zusammen oder beispielsweise ein und/oder mehrere Verbindungsmodule 4 über jeweils einen und/oder mehrere Hubs 6 die gesamte Verschaltung vornehmen. Um die Konfiguration und/oder Ansteuerung der Verbindungsmodule 4 zentral zu ermöglichen, kann ein Mastermodul 3 mehreren der einzelnen Verbindungsmodulen 4 vorgeschaltet sein. Ebenfalls ist es möglich, dass eine weitere Untergliederung der Verschaltung mittels wenigstens eines Hubs 6 erfolgt.

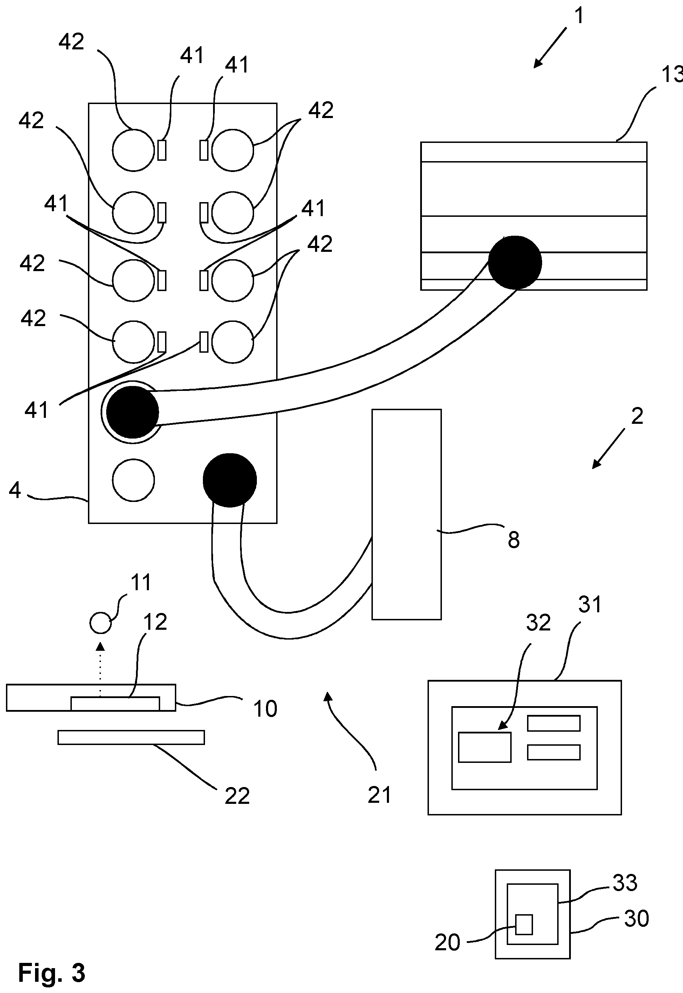

In Fig. 3 sind Teile eines Systems 2 gemäß Ausführungsbeispielen der Erfindung dargestellt. Das System 2 kann eine Detektionsvorrichtung 22, insbesondere einen Scanner 22 oder eine Kamera 22, für eine Bereitstellung eines Identifikators 11 eines Installationselements 10, vorzugsweise eines Kabels 10 oder eines Bauteils 10, umfassen. Ferner kann das System 2 wenigstens eine elektrische Komponente 4, vorzugsweise in der Form eines Verbindungsmoduls 4 zur Verbindung mit dem Installationselement 10 und weiteren Installationselementen 10, aufweisen. Ebenfalls kann eine Vorrichtung 30 zur Datenverarbeitung Teil des Systems 2 sein, wobei diese Datenverarbeitungsvorrichtung 30 Mittel zur Ausführung der Schritte eines Verfahren 100 gemäß Ausführungsbeispielen der Erfindung umfassen kann.

Der Identifikator 11 kann in einem dem Installationselement 10 zugeordneten, insbesondere an diesem angeordneten, maschinenlesbaren Code 12 kodiert sein, wobei der maschinenlesbare Code 12 mittels der Detektionsvorrichtung 22 maschinenlesbar ausgeführt ist. Damit ist es für einen Benutzer möglich, mittels der Detektionsvorrichtung 22 den Code 12 einzuscannen und somit den Identifikator 11 an die Datenverarbeitungsvorrichtung 30 zu übertragen.

Ferner können die Komponenten 4 und wenigstens ein Computer 30, 31 und/oder eine Steuerungsvorrichtung 8 über ein Bussystem 21 jeweils zur bidirektionalen Kommunikation miteinander verbunden sein, wobei die bidirektionale Kommunikation auf Basis eines Kommunikationsprotokolls für ein Feldbussystem vorgesehen sein kann, insbesondere auf Basis eines ProfiNet-, Ethernet/IP- oder 802.3-Standards, und/oder die bidirektionale Kommunikation kabelgebunden über ein Bussystem 21 oder kabellos mittels Bluetooth oder WLAN, auf Basis eines Standards gemäß IEEE 802.11 oder auf Basis eines Mobilfunk-Telekommunikationsstandards vorgesehen sein kann. Um einen Betrieb der Komponente 4 zu ermöglichen, kann die Komponente 4 ferner mit einer Energieversorgung 13 verbunden sein.

Ferner ist ein Computerprogramm 20 dargestellt, welches Befehle umfasst, die bei der Ausführung des Programms durch einen Computer 30 diesen veranlassen, die Schritte des Verfahrens 100 gemäß Ausführungsbeispielen der Erfindung auszuführen.

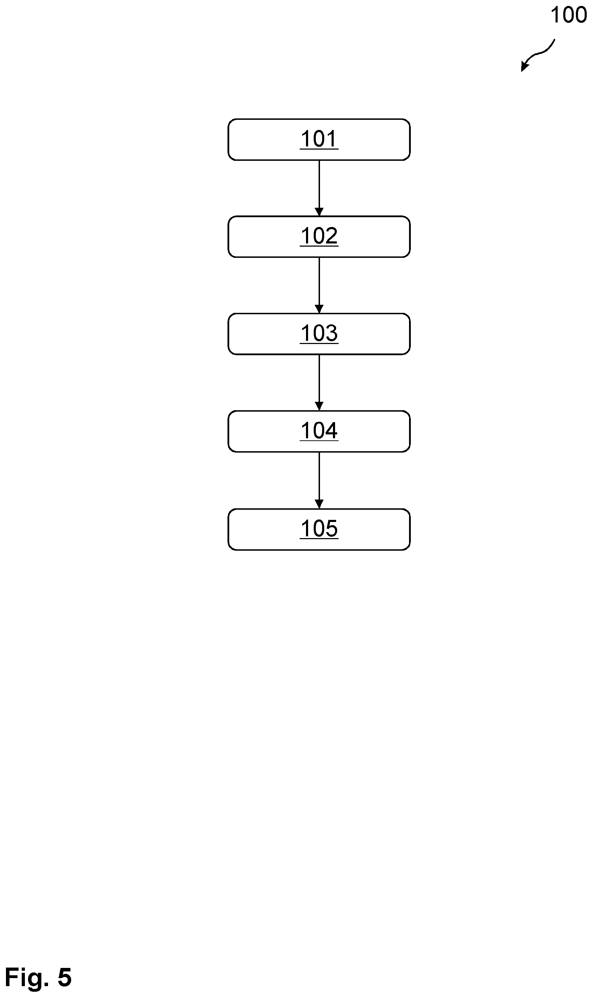

In Fig. 5 ist ein Ausführungsbeispiel eines erfindungsgemäßen Verfahrens 100 für eine computer-gestützte Ermittlung von Ineffizienzen bei der Installation von räumlich dezentral angeordneten, elektrischen Komponenten 4 einer Maschine 1, insbesondere einer Anlage 1, visualisiert. Gemäß einem ersten Verfahrensschritt 101 kann ein Erfassen eines Startzeitpunktes eines Arbeitsschrittes bei der Installation eines Installationselements 10, vorzugsweise eines Kabels oder eines Bauteils, der Maschine, vorgesehen sein. Der Startzeitpunkt kann durch ein Empfangen eines Identifikators 11 des Installationselements 10 von einer dem Benutzer zugeordneten Lesevorrichtung erfasst werden. Ferner kann gemäß einem zweiten Verfahrensschritt 102 ein Erfassen zumindest eines Bewegungsprofils eines Benutzers während der Ausführung des Arbeitsschrittes vorgesehen sein. Das Erfassen des zumindest einen Bewegungsprofils des Benutzers kann durch ein Orten der dem Benutzer zugeordneten Lesevorrichtung erfolgen. Ferner kann gemäß einem dritten Verfahrensschritt 103 ein Erfassen eines Endzeitpunktes des Arbeitsschrittes erfolgen. Der Endzeitpunkt kann durch ein Empfangen einer Bestätigung einer korrekten Montage des Installationselements 10, beispielsweise durch den Benutzer, erfasst werden. In einem vierten Verfahrensschritt 104 kann zumindest eine Installationsineffizienz bei der Ausführung des Arbeitsschrittes ermittelt werden. Dies kann zumindest zum Teil basierend auf einer dem Start- und Endzeitpunkt entsprechenden für den Arbeitsschritt benötigten Zeit und/oder dem erfassten zumindest einen Bewegungsprofil erfolgen. In einem fünften Verfahrensschritt 105 kann ein automatisches Dokumentieren der zumindest einen ermittelten Installationsineffizienz erfolgen.

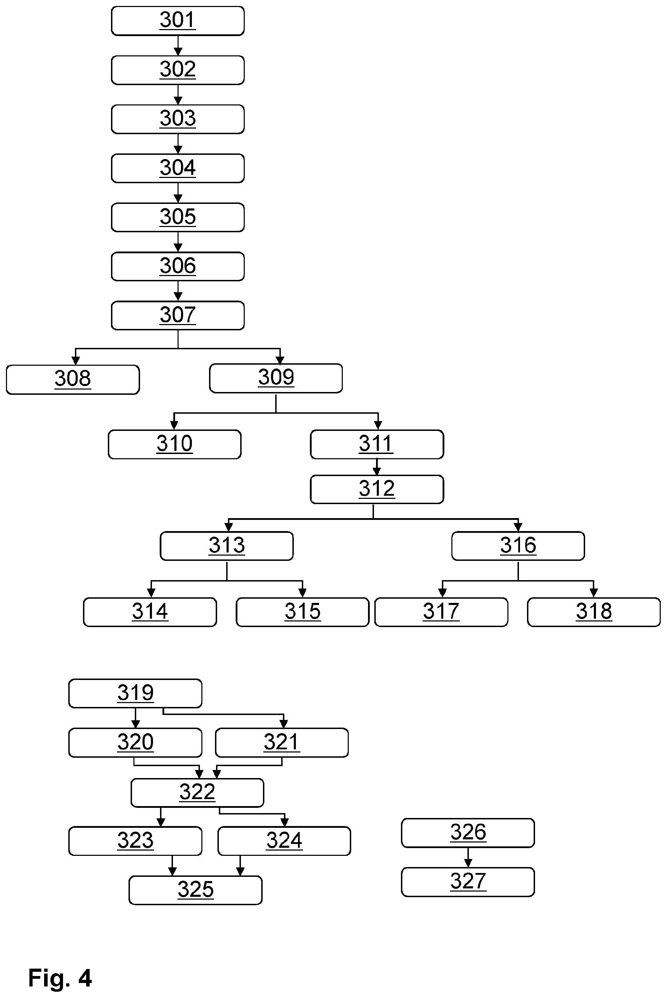

In Fig. 4 ist ein Ausführungsbeispiel der Erfindung mit weiteren Einzelheiten gezeigt. In Schritt 301 beginnt ein Benutzer mit der elektrischen Installation einer Anlage. Dazu meldet er sich an einem Tablet oder tragbaren Computer mit seiner Nutzerkennung an. Zusätzlich aktiviert der Benutzer seine Lesevorrichtung und verknüpft sie mit dem ausgewählten Tablet oder PC. Während des nachfolgenden Prozessablaufs wird die Lesevorrichtung während der gesamten Installation vom Benutzer mittransportiert.

In Schritt 302 beginnt der Benutzer mit der Installation. Während der Installation erfolgt in Schritt 303 eine automatische Erfassung und Dokumentation des Zeitpunkts der erstmaligen Identifikation eines Bauteils sowie in Schritt 305 eine Erfassung und Dokumentation des Zeitpunkts der Bestätigung der korrekten Montage des jeweiligen Bauteils. Ferner erfolgt dazwischen, in Schritt 304, eine fortlaufende Erfassung und Dokumentation der Standorte der Lesevorrichtung, sodass eine digitale Karte der Bewegungsprofile konstruiert werden kann. Der Zeitraum, beginnend mit der ersten Identifikation eines Bauteils in Schritt 303 und endend mit der Bestätigung der korrekten Montage in Schritt 305, wird jeweils als ein Arbeitsschritt im gesamten Installationsprozess gewertet. Anhand dieser Einheit wird in Schritt 306 die jeweils benötigte Zeit für die Durchführung des Arbeitsschrittes dokumentiert und zu der Datenbasis hinzugefügt, die auf Basis der bisher erfassten historischen Zeitdaten erstellt wurde. Anhand der Summe aller bereits erfassten Daten wird im System in Schritt 307 jeweils ein Mittelwert für die benötigte Zeit pro Arbeitsschritt erstellt. Hierbei können zwei Fälle auftreten:
a. Es existieren noch keine historischen Daten. Ein Vergleich ist nicht möglich. Die neu erfasste Zeit wird in Schritt 308 zur Datenbasis hinzugefügt.
b. Es existieren bereits historische Daten und/oder manuell festgelegte Zielwerte. Die aktuell benötigte Zeit wird in Schritt 309 mit dem Mittelwert und der zugehörigen Standardabweichung verglichen.

Liegt der erfasste Wert innerhalb der anhand der Standardabweichung definierten Wertebereichs, wird in Schritt 310 kein auffälliges Ergebnis identifiziert. Liegt der erfasste Wert außerhalb des anhand der Standardabweichung definierten Wertebereichs, wird in Schritt 311 ein auffälliges Ergebnis identifiziert.

Im Falle eines auffälligen Ergebnisses werden zusätzlich in Schritt 312 die erfassten Bewegungsdaten auf auffällige Abweichungen von den Standardwerten (ähnliches Verfahren wie oben) analysiert.

Weicht das erfasste Bewegungsprofil nicht auffällig von den Standardwerten ab, wird in Schritt 313 der jeweilige Arbeitsschritt lediglich als auffällig in einer Dimension (Zeit) dokumentiert. Bei mehrmaligem (zuvor festgelegtem) Wiederauftreten der gleichartigen Auffälligkeit bei demselben Nutzer wird in Schritt 314 eine personenspezifische Ineffizienz identifiziert. Diese wird als Hinweismeldung auf einen möglichen Schulungsbedarf für den Administrator ausgegeben. Bei mehrmaligem (zuvor festgelegtem) Wiederauftreten der gleichartigen Auffälligkeit bei unterschiedlichen Nutzern wird in Schritt 315 eine Arbeitsschritt-spezifische Ineffizienz identifiziert. Diese wird als Hinweismeldung auf eine mögliche Anpassung der Installationsanweisung für den Administrator ausgegeben.

Weicht das erfasste Bewegungsprofil auffällig von den Standardwerten ab, wird in Schritt 316 der jeweilige Arbeitsschritt als auffällig in zwei Dimensionen (Weg und Zeit) dokumentiert. Bei mehrmaligem (zuvor festgelegtem) Wiederauftreten der gleichartigen Auffälligkeit bei demselben Nutzer wird in Schritt 317 eine personenspezifische Ineffizienz identifiziert. Diese wird als Hinweismeldung auf einen möglichen Schulungsbedarf für den Administrator ausgegeben. Bei mehrmaligem (zuvor festgelegtem) Wiederauftreten der gleichartigen Auffälligkeit bei unterschiedlichen Nutzern wird in Schritt 318 eine Arbeitsschritt-spezifische Ineffizienz identifiziert. Diese wird als Hinweismeldung auf eine mögliche Anpassung der Installationsanweisung für den Administrator ausgegeben.

Im Falle sich wiederholender Erstidentifikationen von Bauteilen in großer räumlicher Entfernung zu ihrem finalen Installationsort interpretiert das System in Schritt 319 den Ort der Erstidentifikation als Lagerort und überprüft die Auswirkungen von Alternativlagerorten und/oder alternative Transportrouten auf die benötigte Zeit für den jeweiligen Arbeitsschritt.

Im Falle der Identifikation einer besseren Alternative zum aktuellen Lagerort simuliert das System in Schritt 320 diese Alternative im Laufwegnetz und gibt diese in einer Hinweismeldung an den Administrator aus. Im Falle einer Identifikation mehrerer gleichwertiger besserer Alternativen zum aktuellen Lagerort simuliert das System in Schritt 321 diese Alternativen im Laufwegnetz und gibt diese in einer Hinweismeldung zur Auswahl an den Administrator aus. Sollte der Administrator die Änderung des Lagerorts annehmen, so dokumentiert das System in Schritt 322 den geänderten Lagerort automatisch im Laufwegnetz. Im Falle der Identifikation einer besseren Alternative zur aktuellen Transportroute simuliert das System in Schritt 323 diese Alternative als mögliche Transportroute und gibt diese in einer Hinweismeldung an den Administrator aus. Im Falle einer Identifikation mehrerer gleichwertiger besserer Alternativen zur aktuellen Transportroute simuliert das System diese in Schritt 324 und gibt diese in einer Hinweismeldung zur Auswahl an den Administrator aus. Sollte der Administrator die Änderung der Transportroute annehmen, so dokumentiert das System in Schritt 325 die geänderte Transportroute automatisch.

Nach der abgeschlossenen Installation wird in Schritt 326 die insgesamt benötigte Zeit aller Benutzer, die an der jeweiligen Maschine beteiligt waren, summiert und in den Datenspeicher überführt. Im Anschluss kann in Schritt 327 ein Mittelwert der Installationszeit aller baugleicher Maschinen gebildet werden, sodass für zukünftige Installationsprojekte eine geschätzte Installationsdauer für den jeweils gleichen Maschinentyp ausgegeben werden kann.

Obwohl einige Aspekte im Zusammenhang mit einer Vorrichtung beschrieben wurden, ist es klar, dass diese Aspekte auch eine Beschreibung des entsprechenden Verfahrens darstellen, wobei ein Element oder eine Vorrichtung einem Verfahrensschritt oder einem Merkmal eines Verfahrensschritts entspricht. Analog dazu stellen Aspekte, die im Zusammenhang mit einem Verfahrensschritt beschrieben werden, auch eine Beschreibung eines entsprechenden Blocks oder Elements oder Merkmals eines entsprechenden Geräts dar.

Ausführungsformen der Erfindung können auf einem Computersystem implementiert werden. Bei dem Computersystem kann es sich um ein lokales Computergerät (z. B. Personal Computer, Laptop, Tablet-Computer oder Mobiltelefon) mit einem oder mehreren Prozessoren und einem oder mehreren Speichergeräten handeln oder um ein verteiltes Computersystem (z. B. ein Cloud-Computersystem mit einem oder mehreren Prozessoren und einem oder mehreren Speichergeräten, die an verschiedenen Orten verteilt sind, z. B. bei einem lokalen Client und/oder einer oder mehreren entfernten Serverfarmen und/oder Datenzentren). Das Computersystem kann jede beliebige Schaltung oder Kombination von Schaltungen umfassen. In einer Ausführungsform kann das Computersystem einen oder mehrere Prozessoren beliebiger Art umfassen. Der hier verwendete Begriff "Prozessor" kann jede Art von Rechenschaltung bezeichnen, z. B. einen Mikroprozessor, einen Mikrocontroller, einen CISC-Mikroprozessor (Complex Instruction Set Computing), einen RISC-Mikroprozessor (Reduced Instruction Set Computing), einen VLIW-Mikroprozessor (Very Long Instruction Word), einen Grafikprozessor, einen digitalen Signalprozessor (DSP), einen Mehrkernprozessor, ein FPGA (Field Programmable Gate Array) oder jede andere Art von Prozessor oder Verarbeitungsschaltung. Andere Arten von Schaltkreisen, die im Computersystem enthalten sein können, können ein kundenspezifischer Schaltkreis, ein anwendungsspezifischer integrierter Schaltkreis (ASIC) oder ähnliches sein, wie z. B. ein oder mehrere Schaltkreise (z. B. ein Kommunikationsschaltkreis) zur Verwendung in drahtlosen Geräten wie Mobiltelefonen, Tablet-Computern, Laptop-Computern, Zwei-Wege-Funkgeräten und ähnlichen elektronischen Systemen. Das Computersystem kann eine oder mehrere Speichervorrichtungen enthalten, die ein oder mehrere für die jeweilige Anwendung geeignete Speicherelemente umfassen können, wie z. B. einen Hauptspeicher in Form eines Direktzugriffsspeichers (RAM), eine oder mehrere Festplatten und/oder ein oder mehrere Laufwerke, die Wechseldatenträger wie Compact Disks (CD), Flash-Speicherkarten, digitale Videodisks (DVD) und dergleichen verarbeiten. Das Computersystem kann auch ein Anzeigegerät, einen oder mehrere Lautsprecher und eine Tastatur und/oder ein Steuergerät enthalten, das eine Maus, einen Trackball, einen Touchscreen, ein Spracherkennungsgerät oder ein anderes Gerät umfassen kann, das es einem Systembenutzer ermöglicht, Informationen in das Computersystem einzugeben und Informationen von ihm zu empfangen.

Einige oder alle Verfahrensschritte können von einem Hardware-Gerät (oder unter Verwendung eines solchen) ausgeführt werden, wie z. B. einem Prozessor, einem Mikroprozessor, einem programmierbaren Computer oder einer elektronischen Schaltung. In einigen Ausführungsformen können einige oder mehrere der wichtigsten Verfahrensschritte von einem solchen Gerät ausgeführt werden.

Abhängig von bestimmten Implementierungsanforderungen können Ausführungsformen der Erfindung in Hardware oder in Software implementiert werden. Die Implementierung kann unter Verwendung eines nicht-übertragbaren Speichermediums wie eines digitalen Speichermediums, beispielsweise einer Diskette, einer DVD, einer Blu-Ray, einer CD, eines ROM, eines PROM, eines EPROM, eines EEPROM oder eines FLASH-Speichers erfolgen, auf dem elektronisch lesbare Steuersignale gespeichert sind, die mit einem programmierbaren Computersystem zusammenwirken (oder zusammenwirken können), so dass das jeweilige Verfahren durchgeführt wird. Daher kann das digitale Speichermedium computerlesbar sein.

Einige Ausführungsformen der Erfindung umfassen einen Datenträger mit elektronisch lesbaren Steuersignalen, die in der Lage sind, mit einem programmierbaren Computersystem zusammenzuarbeiten, so dass eines der hier beschriebenen Verfahren durchgeführt wird.

Im Allgemeinen können Ausführungsformen der vorliegenden Erfindung als Computerprogrammprodukt mit einem Programmcode implementiert werden, wobei der Programmcode zur Durchführung eines der Verfahren dient, wenn das Computerprogrammprodukt auf einem Computer läuft. Der Programmcode kann zum Beispiel auf einem maschinenlesbaren Träger gespeichert sein.

Andere Ausführungsformen umfassen das Computerprogramm zur Durchführung eines der hier beschriebenen Verfahren, das auf einem maschinenlesbaren Träger gespeichert ist.

Mit anderen Worten, eine Ausführungsform der vorliegenden Erfindung ist daher ein Computerprogramm mit einem Programmcode zur Durchführung eines der hierin beschriebenen Verfahren, wenn das Computerprogramm auf einem Computer läuft.

Eine weitere Ausführungsform der vorliegenden Erfindung ist daher ein Speichermedium (oder ein Datenträger oder ein computerlesbares Medium), auf dem das Computerprogramm zur Durchführung eines der hierin beschriebenen Verfahren gespeichert ist, wenn es von einem Prozessor ausgeführt wird. Der Datenträger, das digitale Speichermedium oder das aufgezeichnete Medium sind typischerweise greifbar und/oder nicht-übertragbar. Eine weitere Ausführungsform der vorliegenden Erfindung ist ein Gerät, wie hierin beschrieben, mit einem Prozessor und dem Speichermedium.

Eine weitere Ausführungsform der Erfindung ist daher ein Datenstrom oder eine Folge von Signalen, die das Computerprogramm zur Durchführung eines der hierin beschriebenen Verfahren darstellen. Der Datenstrom bzw. die Signalfolge kann beispielsweise so ausgestaltet sein, dass er bzw. sie über eine Datenkommunikationsverbindung, z.B. über das Internet, übertragen werden kann.

Eine weitere Ausführungsform umfasst ein Verarbeitungsmittel, z. B. einen Computer oder ein programmierbares Logikgerät, das so konfiguriert oder angepasst ist, dass es eines der hierin beschriebenen Verfahren durchführen kann.

Eine weitere Ausführungsform umfasst einen Computer, auf dem das Computerprogramm zur Durchführung eines der hierin beschriebenen Verfahren installiert ist.

Eine weitere Ausführungsform der Erfindung umfasst eine Vorrichtung oder ein System, die bzw. das so konfiguriert ist, dass sie bzw. es ein Computerprogramm zur Durchführung eines der hierin beschriebenen Verfahren an einen Empfänger überträgt (z. B. auf elektronischem oder optischem Weg). Bei dem Empfänger kann es sich beispielsweise um einen Computer, ein mobiles Gerät, ein Speichergerät oder dergleichen handeln. Die Vorrichtung oder das System kann zum Beispiel einen Dateiserver zur Übertragung des Computerprogramms an den Empfänger umfassen.

In einigen Ausführungsformen kann eine programmierbare Logikvorrichtung (z. B. ein feldprogrammierbares Gate-Array) verwendet werden, um einige oder alle Funktionen der hier beschriebenen Verfahren auszuführen. In einigen Ausführungsformen kann ein feldprogrammierbares Gate-Array mit einem Mikroprozessor zusammenarbeiten, um eines der hier beschriebenen Verfahren durchzuführen. Im Allgemeinen werden die Verfahren vorzugsweise von einem beliebigen Hardware-Gerät durchgeführt.

### Liste der Bezugszeichen

- 1: Maschine, Anlage
- 2: System
- 3: Mastermodul
- 4: Modul, Komponente, Verbindungsmodul
- 5: Geräte, Sensor, Aktor
- 6: Hub
- 8: Steuerungsvorrichtung, SPS
- 9: Schaltschrank

- 13: Energieversorgung

- 20: Computerprogramm
- 21: Bussystem

- 30: Vorrichtung
- 31: Computer
- 32: Benutzeroberfläche
- 33: Datenspeicher

- 41: Anzeigeelement
- 42: Anschlussstelle, Steckplatz

- 100: Verfahren
- 101: erster Verfahrensschritt
- 102: zweiter Verfahrensschritt
- 103: dritter Verfahrensschritt
- 104: vierter Verfahrensschritt
- 105: fünfter Verfahrensschritt

- 301: Benutzeranmeldung
- 302: Beginn der Installation
- 303: Erfassung und Dokumentation des Startzeitpunktes
- 304: Erfassung und Dokumentation der Standorte der Lesevorrichtung
- 305: Erfassung und Dokumentation des Endzeitpunktes
- 306: Ermittlung der benötigten Zeit
- 307: Ermittlung eines Mittelwertes für die benötigte Zeit
- 308: Hinzufügen der erfassten Zeit zur Datenbasis
- 309: Vergleich der erfassten Zeit mit dem Mittelwert
- 310: kein auffälliges Ergebnis identifiziert
- 311: auffälliges Ergebnis identifiziert
- 312: Analyse der Bewegungsdaten
- 313: Dokumentation des Arbeitsschritts als in einer Dimension auffällig
- 314: personenspezifische Ineffizienz identifiziert
- 315: arbeitsschrittspezifische Ineffizienz identifiziert
- 316: Dokumentation des Arbeitsschritts als in zwei Dimensionen auffällig
- 317: personenspezifische Ineffizienz identifiziert
- 318: arbeitsschrittspezifische Ineffizienz identifiziert
- 319: Interpretation des Ortes der Erstidentifikation als Lagerort
- 320: Simulation einer Alternative für den Lagerort
- 321: Simulation mehrerer Alternativen für den Lagerort
- 322: Dokumentation des geänderten Lagerorts
- 323: Simulation einer Alternative für die Transportroute
- 324: Simulation mehrerer Alternativen für die Transportroute
- 325: Dokumentation der geänderten Transportroute
- 326: Aufsummieren der Gesamtzeit
- 327: Mittelwertbildung

## Patentansprüche

1. Ein Verfahren (100) für eine computer-gestützte Ermittlung der Effizienz bei der Installation von räumlich dezentral angeordneten, elektrischen Komponenten (4) einer Maschine (1), insbesondere einer Anlage (1), **gekennzeichnet durch** die folgenden Schritte:
Erfassen (101) eines Startzeitpunktes eines Arbeitsschrittes bei der Installation eines Installationselements (10), vorzugsweise eines Kabels oder eines Bauteils, der Maschine (1) durch ein Empfangen (101) eines Identifikators (11) des Installationselements (10) von einer dem Benutzer direkt oder indirekt zugeordneten Lesevorrichtung;
Erfassen (102) zumindest eines Bewegungsprofils eines Benutzers während der Ausführung des Arbeitsschrittes durch ein Orten der dem Benutzer direkt oder indirekt zugeordneten Lesevorrichtung;
Erfassen (103) eines Endzeitpunktes des Arbeitsschrittes;
Ermitteln (104) zumindest einer Installationseffizienz bei der Ausführung des Arbeitsschrittes zumindest zum Teil basierend auf einer dem Start- und Endzeitpunkt entsprechenden für den Arbeitsschritt benötigten Zeit und/oder dem erfassten zumindest einen Bewegungsprofil; und
automatisches Dokumentieren (105) der zumindest einen ermittelten Installationseffizienz.

2. Das Verfahren nach Anspruch 1, wobei:
der Endzeitpunkt durch ein Empfangen (103) einer Bestätigung einer korrekten Montage des Installationselements (10) erfasst wird.

3. Das Verfahren nach einem der vorhergehenden Ansprüche, wobei das Ermitteln (104) der zumindest einen Installationseffizienz umfasst:
Vergleichen der ermittelten für den Arbeitsschritt benötigten Zeit mit einer in einer Datenbasis gespeicherten Soll-Zeit für diesen Arbeitsschritt, wobei, die Soll-Zeit einer mittleren benötigten Zeit für diesen Arbeitsschritt entspricht;
falls die benötigte Zeit außerhalb eines vorgegebenen Akzeptanzbereichs bezüglich der Soll-Zeit liegt, automatisches Dokumentieren (105) der Ausführung des Arbeitsschrittes als auffällige Ausführung.

4. Das Verfahren nach Anspruch 3, wobei das Ermitteln (104) der zumindest einen Installationseffizienz ferner umfasst:
Vergleichen des erfassten zumindest einen Bewegungsprofils des Benutzers mit einem in der Datenbasis gespeicherten zumindest einen Soll-Bewegungsprofil für diesen Arbeitsschritt;
falls das ermittelte zumindest eine Bewegungsprofil innerhalb eines vorgegebenen Akzeptanzbereichs bezüglich des Soll-Bewegungsprofils liegt, automatisches Dokumentieren (105) der Ausführung des Arbeitsschrittes als hinsichtlich der Ausführungszeit auffällige Ausführung.

5. Das Verfahren nach Anspruch 4, das ferner umfasst:
falls das ermittelte zumindest eine Bewegungsprofil außerhalb eines vorgegebenen Akzeptanzbereichs bezüglich des Soll-Bewegungsprofils liegt, automatisches Dokumentieren (105) der Ausführung des Arbeitsschrittes als hinsichtlich der Ausführungszeit und des Bewegungsprofils auffällige Ausführung.

6. Das Verfahren nach einem der vorhergehenden Ansprüche 3-5, wobei das Ermitteln (104) der zumindest einen Installationseffizienz ferner umfasst:
falls die auffällige Ausführung außerhalb eines vorgegebenen Akzeptanzbereichs bezüglich der Ausführungshäufigkeit für den Benutzer liegt, automatisches Dokumentieren (105) einer personenspezifischen Installationsineffizienz.

7. Das Verfahren nach einem der vorhergehenden Ansprüche 3-6, wobei das Ermitteln (104) der zumindest einen Installationseffizienz ferner umfasst:
falls die auffällige Ausführung außerhalb eines vorgegebenen Akzeptanzbereichs bezüglich der Ausführungshäufigkeit für mehrere Benutzer liegt, automatisches Dokumentieren (105) einer arbeitsschrittspezifischen Installationsineffizienz.

8. Das Verfahren nach einem der vorhergehenden Ansprüche, das ferner umfasst:
Ermitteln einer räumlichen Distanz eines Lagerortes des Installationselements (10) zu einem Installationsort der Maschine (1);
falls die räumliche Distanz außerhalb eines vorgegebenen Akzeptanzbereichs liegt, Simulieren zumindest einer Ausführung des Arbeitsschrittes mit einem alternativen Lagerort des Installationselements (10) und/oder mit einer alternativen Transportroute;
falls die zumindest eine simulierte Ausführung des Arbeitsschrittes ein vorgegebenes Optimierungsziel erfüllt, automatisches Dokumentieren (105) der zumindest einen simulierten Ausführung des Arbeitsschrittes.

9. Das Verfahren nach einem der vorhergehenden Ansprüche, das ferner umfasst:
Ausgeben zumindest einer Optimierungsinformation an den Benutzer oder einen Administrator zumindest zum Teil basierend auf der zumindest einen ermittelten Installationseffizienz und/oder auf der zumindest einen simulierten Ausführung des Arbeitsschrittes nach Anspruch 8, vorzugsweise während der Installation der Maschine (1).

10. Das Verfahren nach einem der vorhergehenden Ansprüche, das ferner umfasst:
Ermitteln einer für die Installation der Maschine (1) benötigten Gesamtzeit, vorzugsweise aller Benutzer;
automatisches Dokumentieren (105) der ermittelten benötigten Gesamtzeit.

11. Das Verfahren nach einem der vorhergehenden Ansprüche, das ferner umfasst:
Erzeugen einer Steueranweisung für ein technisches System und/oder einen technischen Prozess zumindest zum Teil basierend auf der zumindest einen ermittelten Installationseffizienz;
wobei das technische System insbesondere eine (teil-)autonome Installationsvorrichtung, beispielsweise ein Werkstattwagen, (teil-)autonome Kommissionierung, und/ oder ein Cobot und/oder ein Industrieroboter ist.

12. Eine Vorrichtung (30) zur Datenverarbeitung, umfassend Mittel zur Ausführung der Schritte des Verfahrens (100)nach einem der Ansprüche 1-11.

13. Ein Computerprogramm (20), umfassend Befehle, die bei der Ausführung des Computerprogramms (20) durch die Vorrichtung zur Datenverarbeitung gemäß dem Anspruch 12 diese veranlassen, die Schritte des Verfahrens (100) nach einem der Ansprüche 1 bis 11 auszuführen.

14. Ein System für eine computer-gestützte Ermittlung der Effizienz bei der Installation von räumlich dezentral angeordneten, elektrischen Komponenten (4) einer Maschine (1), insbesondere einer Anlage (1), umfassend:die Vorrichtung zur Datenverarbeitung nach Anspruch 12.

## Claims

1. A method (100) for computer-aided determination of the efficiency of the installation of spatially distributed electrical components (4) of a machine (1), in particular a plant (1), **characterized by** the following steps:
Detecting (101) a start time of a work step during the installation of an installation element (10), preferably a cable or a component, of the machine (1) by receiving (101) an identifier (11) of the installation element (10) from a reading device directly or indirectly assigned to the user;
Detecting (102) at least one movement profile of a user during the execution of the work step by locating the reading device directly or indirectly assigned to the user;
Detecting (103) an end time of the work step;
Determining (104) at least one installation efficiency during the execution of the work step, at least in part based on a time required for the work step corresponding to the start and end times and/or the at least one movement profile detected; and
automatically documenting (105) the at least one installation efficiency determined.

2. The method according to claim 1, wherein:
the end time is detected by receiving (103) confirmation of correct assembly of the installation element (10).

3. The method according to any one of the preceding claims, wherein the determining (104) of the at least one installation efficiency comprises:
comparing the determined time required for the work step with a target time stored in a database for this work step, wherein the target time corresponds to an average time required for this work step;
if the required time lies outside a predetermined acceptance range with respect to the target time, automatically documenting (105) the execution of the work step as a conspicuous execution.

4. The method according to claim 3, wherein the determination (104) of the at least one installation efficiency further comprises:
Comparing the detected at least one movement profile of the user with at least one target movement profile stored in the database for this work step;
if the determined at least one movement profile lies within a predetermined acceptance range with respect to the target movement profile, automatically documenting (105) the execution of the work step as a conspicuous execution with regard to the execution time.

5. The method according to claim 4, further comprising:
if the determined at least one movement profile lies outside a predetermined acceptance range with respect to the target movement profile, automatically documenting (105) the execution of the work step as an execution that is conspicuous in terms of execution time and movement profile.

6. The method according to any one of the preceding claims 3-5, wherein the determination (104) of the at least one installation efficiency further comprises:
if the conspicuous execution lies outside a predetermined acceptance range with respect to the execution frequency for the user, automatically documenting (105) a person-specific installation inefficiency.

7. The method according to any one of the preceding claims 3-6, wherein the determination (104) of the at least one installation efficiency further comprises:
if the conspicuous execution lies outside a predetermined acceptance range with regard to the execution frequency for multiple users, automatically documenting (105) a work step-specific installation inefficiency.

8. The method according to any one of the preceding claims, further comprising:
determining a spatial distance between a storage location of the installation element (10) and an installation location of the machine (1);
if the spatial distance is outside a predetermined acceptance range, simulating at least one execution of the work step with an alternative storage location of the installation element (10) and/or with an alternative transport route;
if the at least one simulated execution of the work step fulfills a predetermined optimization target, automatically documenting (105) the at least one simulated execution of the work step.

9. The method according to any one of the preceding claims, further comprising:
outputting at least one optimization piece of information to the user or an administrator at least in part based on the at least one determined installation efficiency and/or on the at least one simulated execution of the work step according to claim 8, preferably during the installation of the machine (1).

10. The method according to any one of the preceding claims, further comprising:
Determining a total time required for the installation of the machine (1), preferably for all users;
Automatically documenting (105) the determined total time required.

11. The method according to any one of the preceding claims, further comprising:
generating a control instruction for a technical system and/or a technical process at least in part based on the at least one determined installation efficiency;
wherein the technical system is in particular a (partially) autonomous installation device, for example a service trolley, (partially) autonomous picking, and/or a cobot and/or an industrial robot.

12. An apparatus (30) for data processing, comprising means for executing the steps of the method (100) according to any one of claims 1 to11.

13. A computer program (20) comprising instructions which, when executed by the data processing apparatus (30) according to claim 12, cause it to execute the steps of the method (100) according to any one of claims 1 to 11.

14. A system for computer-aided determination of the efficiency of the installation of spatially distributed electrical components (4) of a machine (1), in particular a plant (1), comprising: the apparatus (30) for data processing according to claim 12.

## Revendications

1. Procédé (100) de détermination assistée par ordinateur de l'efficacité de l'installation de composants électriques (4) d'une machine (1) agencés de manière décentralisée dans l'espace, en particulier d'une installation (1), **caractérisée par** les étapes suivantes :
saisie (101) d'un moment de début d'une étape de travail lors de l'installation d'un élément d'installation (10), de préférence d'un câble ou d'un composant, de la machine (1) en recevant (101) un identifiant (11) de l'élément d'installation (10) d'un dispositif de lecture associé directement ou indirectement à l'utilisateur ;
saisie (102) d'au moins un profil de mouvement d'un utilisateur pendant l'exécution de l'étape de travail par un repérage du dispositif de lecture associé directement ou indirectement à l'utilisateur ;
saisie (103) d'un moment de fin de l'étape de travail ;
détermination (104) d'au moins une efficacité d'installation lors de l'exécution de l'étape de travail en se basant au moins en partie sur un temps nécessaire pour l'étape de travail correspondant au moment de début et au moment de fin et/ou sur l'au moins un profil de mouvement saisi ; et
documentation automatique (105) de l'au moins une efficacité d'installation déterminée.

2. Procédé selon la revendication 1, dans lequel :
le moment de fin est saisi par une réception (103) d'une confirmation d'un montage correct de l'élément d'installation (10).

3. Procédé selon l'une des revendications précédentes, dans lequel la détermination (104) de ladite au moins une efficacité d'installation comprend :
comparaison du temps nécessaire déterminé pour l'étape de travail avec un temps de consigne pour cette étape de travail, enregistré dans une base de données, le temps de consigne correspondant à un temps moyen nécessaire pour cette étape de travail ;
si le temps nécessaire se situe en dehors d'une plage d'acceptation prédéterminée par rapport au temps de consigne, documentation automatique (105) de l'exécution de l'étape de travail comme une exécution remarquable.

4. Procédé selon la revendication 3, dans lequel la détermination (104) de ladite au moins une efficacité d'installation comprend en outre :
comparaison de l'au moins un profil de mouvement de l'utilisateur saisi à un au moins un profil de mouvement de consigne mémorisé dans la base de données pour cette étape de travail ;
si l'au moins un profil de mouvement déterminé se situe à l'intérieur d'une plage d'acceptation prédéterminée par rapport au profil de mouvement de consigne, documentation automatique (105) de l'exécution de l'étape de travail en tant qu'exécution remarquable quant au temps d'exécution.

5. Procédé selon la revendication 4, qui comprend en outre :
si l'au moins un profil de mouvement déterminé se situe en dehors d'une plage d'acceptation prédéterminée par rapport au profil de mouvement de consigne, documentation automatique (105) de l'exécution de l'étape de travail en tant qu'exécution remarquable en quant au temps d'exécution et au profil de mouvement.

6. Procédé selon l'une des revendications précédentes 3 à 5, dans lequel la détermination (104) de ladite au moins une efficacité d'installation comprend en outre :
si l'exécution remarquable se situe en dehors d'une plage d'acceptation prédéterminée concernant la fréquence d'exécution pour l'utilisateur, documentation automatique (105) d'une inefficacité d'installation spécifique à la personne.

7. Procédé selon l'une des revendications précédentes 3 à 6, dans lequel la détermination (104) de ladite au moins une efficacité d'installation comprend en outre :
si l'exécution remarquable se situe en dehors d'une plage d'acceptation prédéterminée concernant la fréquence d'exécution pour plusieurs utilisateurs, documentation automatique (105) d'une inefficacité d'installation spécifique à l'étape de travail.

8. Procédé selon l'une des revendications précédentes, qui comprend en outre :
détermination d'une distance spatiale entre un lieu de stockage de l'élément d'installation (10) et un lieu d'installation de la machine (1) ;
si la distance spatiale se situe en dehors d'une plage d'acceptation prédéterminée, simulation d'au moins une exécution de l'étape de travail avec un lieu de stockage alternatif de l'élément d'installation (10) et/ou avec un itinéraire de transport alternatif ;
si l'au moins une exécution simulée de l'étape de travail remplit un objectif d' optimisation prédéfini, documentation automatique (105) de l'au moins une exécution simulée de l'étape de travail.

9. Procédé selon l'une des revendications précédentes, qui comprend en outre :
émission d'au moins une information d'optimisation à l'utilisateur ou à un administrateur en se basant au moins en partie sur l'au moins une efficacité d'installation déterminée et/ou sur l'au moins une exécution simulée de l'étape de travail selon la revendication 8, de préférence pendant l'installation de la machine (1).

10. Procédé selon l'une des revendications précédentes, qui comprend en outre :
détermination d'un temps total nécessaire à l'installation de la machine (1), de préférence pour tous les utilisateurs ;
documentation automatique (105) du temps total nécessaire déterminé.

11. Procédé selon l'une des revendications précédentes, qui comprend en outre :
génération d'une instruction de commande pour un système technique et/ou un processus technique, au moins en partie sur la base de l'au moins une efficacité d'installation déterminée ;
le système technique étant notamment un dispositif d'installation (partiellement) autonome, par exemple un chariot d'atelier, une préparation de commandes (partiellement) autonome, et/ou un cobot et/ou un robot industriel.

12. Dispositif (30) de traitement de données, comprenant des moyens pour mettre en œuvre les étapes du procédé (100) selon l'une des revendications 1 à 11.

13. Programme informatique (20) comprenant des instructions qui, lorsque le programme informatique (20) est exécuté par un dispositif de traitement de données selon la revendication 12, amènent ce dernier à exécuter les étapes du procédé (100) selon l'une des revendications 1 à 11.

14. Système de détermination assistée par ordinateur de l'efficacité de l'installation de composants électriques (4) d'une machine (1) agencés de manière décentralisée dans l'espace, en particulier d'une installation (1), comprenant : le dispositif de traitement de données selon la revendication 12.
